# EUROPÄISCHE PATENTSCHRIFT

(11) **EP 1 551 916 B1**
(45) Veröffentlichungstag und Bekanntmachung des Hinweises auf die Patenterteilung: **10.01.2007**
(21) Anmeldenummer: 03757916.6
(22) Anmeldetag: 07.10.2003
(51) Int. Cl.: C08K 5/3475, B32B 27/18, B29C 47/06

(54) **POLYCARBONAT ENTHALTEND DIPHENYLCARBONAT UND PLATTEN ENTHALTEND DIESES POLYCARBONAT**
POLYCARBONATE CONTAINING DIPHENYLCARBONATE AND PLATES CONTAINING SAID POLYCARBONATE
POLYCARBONATE CONTENANT DU DIPHENYLCARBONATE, ET PLAQUES CONTENANT CE POLYCARBONATE

(30) Priorität: 09.10.2002 DE 10246957
(43) Veröffentlichungstag der Anmeldung: 13.07.2005
(73) Patentinhaber: Bayer MaterialScience AG, 51368 Leverkusen (DE)
(72) Erfinder: GORNY, Rüdiger, Moon Twp., PA 15108 (US); ANDERS, Siegfried, 51147 Köln (DE); NISING, Wolfgang, 53757 Sankt Augustin (DE); PANTKE, Heidemarie, 40882 Ratingen (DE); MASON, James, Carnegie, PA 15106 (US); MÖTHRATH, Melanie, 40223 Düsseldorf (DE)
(86) Internationale Anmeldenummer: PCT/EP2003/011056
(87) Internationale Veröffentlichungsnummer: WO 2004/035674

(56) Entgegenhaltungen:
- EP-A- 0 320 632
- EP-A- 0 649 724
- WO-A-01/77206
- US-B1- 6 462 165

## Beschreibung

Die vorliegende Erfindung betrifft Polycarbonat enthaltend Diphenylcarbonat und Platten enthaltend dieses Polycarbonat. Dabei ist das Polycarbonat insbesondere Bisphenol-A-Homopolycarbonat. Bisphenol A ist 2,2-Bis(4-hydroxyphenyl)propan.

Für den Begriff Bisphenol wird auch der Begriff Diphenol verwendet.

Polycarbonatplatten sind aus EP-A 0 110 221 bekannt und werden für eine Vielzahl von Anwendungszwecken bereitgestellt. Die Herstellung erfolgt zum Beispiel durch Extrusion von Zusammensetzungen enthaltend Polycarbonat (sogenannte Polycarbonatformmassen). Mehrschichtige Platten können zum Beispiel durch Coextrusion mit Polycarbonatformmassen, die einen erhöhten Anteil an UV-Absorbern enthalten, erhalten werden.

Unter Polycarbonatformmassen werden Zusammensetzungen verstanden, die Polycarbonat enthalten und die thermoplastisch zu Formkörpern umgeformt werden können. Unter Coextrusionsformmassen werden Zusammensetzungen verstanden, die bei der Herstellung von mehrschichtigen Erzeugnissen, insbesondere von mehrschichtigen Platten, nach dem Coextrusionsverfahren eingesetzt werden können.

Ein bei der Extrusion solcher Platten immer wieder auftretendes Problem ist das Absetzen flüchtiger Bestandteile aus den Formmassen an den Vorrichtungen, die zur Herstellung der Platten verwendet werden.

Bei der Herstellung von sogenannten Stegplatten (auch Hohlkammerplatten genannt) treten Ablagerungen insbesondere am sogenannten Kalibrator auf.

Kalibratoren sind dem Fachmann der Extrusionstechnik bekannt. Sie sind beispielsweise beschrieben in Kunststoffhandbuch, Band 3/1, Polycarbonate, Polyacetale, Polyester, Celluloseester, 1992, Carl Hanser Verlag, München, Wien, Seite 251 ff, Kapitel 3.8.12.2

Bei der Herstellung von Massivplatten treten Ablagerungen insbesondere auf den Walzen auf, die Bestandteil der Vorrichtung zur Herstellung der Massivplatten sind.

Diese Ablagerungen können zu Oberflächenstörungen an den Platten führen.

Flüchtige Bestandteile, die sich ablagern können, sind beispielsweise UV-Absorber, Entformungsmittel und andere niedermolekulare Bestandteile der verwendeten Formmassen.

EP-A 0 320 632 beschreibt coextrudierte Platten aus Polycarbonat, die einen UV-Absorber enthalten und ein Gleitmittel enthalten können. Nachteilig ist, dass bei längerer Extrusionsdauer die Oberfläche der Platten durch Ausdampfungen aus der Polycarbonatschmelze, besonders bei der Coextrusion, nachteilig beeinflusst wird.

Das vermehrte Ausdampfen des UV-Absorbers aus der Polycarbonatschmelze führt zur Belagsbildung auf dem Kalibrator oder den Walzen und schließlich zur Bildung von Störungen der Plattenoberfläche (z.B. weiße Flecken, Welligkeit usw.). Am Kalibrator führt außerdem der Polycarbonatabrieb zu pulverigen Ablagerungen auf den coextrudierten Polycarbonatplatten.

EP-A 0 649 724 beschreibt ein Verfahren zur Herstellung von mehrschichtigen Kunststofftafeln aus verzweigten Polycarbonaten mit einem Gewichtsmittel der Molmasse M̅_{w} von 27.000 bis 29.500 g/mol durch Coextrusion einer Kemschicht und mindestens einer Deckschicht mit 1 bis 15 Gew.-% eines UV-Absorbers. Werden in den Formmassen zur Herstellung dieser Kunststofftafeln die in EP-A 0 300 485 beschriebenen Entformungsmittel Glycerinmonostearat, Pentaerythrittetrastearat und deren Mischungen mit Glycerinmonostearat als Hauptkomponente eingesetzt, stellt sich mit der Zeit dennoch eine Verschlechterung der Oberflächen der Platten ein.

Platten aus Polycarbonat werden auch offenbart in EP-A 0 735 074, DE-A 197 27 709, WO 2001/05867, WO 2001 05866, EP-A 0 709 421, EP-A 0 712 878, WO 2001/36511, JP-A 2000254954, JP-A 2000281817, JP-A 2000302893 und JP-A 2000302894. Dabei wird das Polycarbonat aus Diphenolen und Kohlensäurediarylestem durch Umesterung hergestellt.

JP-A 07053709 offenbart ein Verfahren zur Herstellung von Polycarbonat durch Umesterung, wobei das Polycarbonat weniger als 0,4 ppm Diphenylcarbonat enthält.

WO 00/77073 offenbart ein Verfahren zur Herstellung von Polycarbonat durch Umesterung in der Schmelze, wobei das Polycarbonat ein Gehalt von Diphenylcarbonat und anderen niedermolekularen Verbindungen von weniger als 5 ppm aufweist.

Der vorliegenden Erfindung liegt somit die Aufgabe zugrunde, Zusammensetzungen enthaltend Polycarbonat bereit zu stellen, wobei diese Zusammensetzungen zu Platten extrudiert oder coextrudiert werden können, ohne dass die oben geschilderten Nachteile des Standes der Technik auftreten.

Diese Aufgabe wird gelöst durch eine Zusammensetzung enthaltend Polycarbonat und 50 ppm bis 300 ppm, bezogen auf die Masse der Zusammensetzung, Diphenylcarbonat. Diese Zusammensetzung ist Gegenstand der vorliegenden Erfindung.

Weiterhin ist Gegenstand der vorliegenden Erfindung ein Verfahren zur Herstellung der erfindungsgemäßen Zusammensetzung umfassend die Herstellung des Polycarbonates aus Diphenolen und Kohlensäurediarylestem durch Umesterung.

Weiterhin ist Gegenstand der vorliegenden Erfindung ein mehrschichtiges Erzeugnis, bevorzugt eine mehrschichtige Platte, umfassend mindestens eine Schicht A und mindestens eine Schicht B, wobei die Schicht A Polycarbonat oder Polyestercarbonat enthält, und wobei die Schicht B die erfindungsgemäße Zusammensetzung enthält.

In einer besonderen Ausführungsform enthält die Schicht A Bisphenol-A-Homopolycarbonat.

Weiterhin ist Gegenstand der vorliegenden Erfindung ein Verfahren zur Herstellung des erfindungsgemäßen mehrschichtigen Erzeugnisses umfassend die Coextrusion des Polycarbonats oder des Polyestercarbonats, das in der Schicht A enthalten ist, und der Zusammensetzung, die in der Schicht B enthalten ist.

Ein Vorteil der erfindungsgemäßen Zusammensetzungen ist, dass bei der Herstellung von Platten aus diesen Zusammensetzungen durch Extrusion oder Coextrusion auch bei längerer kontinuierlicher Fahrweise, eine gute Qualität der Oberfläche der extrudierten Platten erhalten wird. Ablagerungen, die die Qualität der Oberfläche der Platten beeinträchtigen, treten nicht auf.

Die erfindungsgemäße Zusammensetzung enthaltend Polycarbonat enthält 50 ppm bis 300 ppm, bevorzugt 70 ppm bis 250 ppm, besonders bevorzugt 100 ppm bis 200 ppm, bezogen auf die Masse der Zusammensetzung, Diphenylcarbonat.

In einer besonderen Ausführungsform enthält die erfindungsgemäße Zusammensetzung Polycarbonat in einer Menge von mindestens 80 Gew.-%, bezogen auf die Masse der Zusammensetzung.

In einer besonderen Ausführungsform enthält die erfindungsgemäße Zusammensetzung Bisphenol-A-Homopolycarbonat.

In einer besonderen Ausführungsform enthält die erfindungsgemäße Zusammensetzung zusätzlich UV-Absorber. Es kann einer oder es können mehrere verschiedene UV-Absorber sein.

In einer besonderen Ausführungsform ist der UV-Absorber in einer Menge von 0 bis 1 Gew.-%, bezogen auf die Masse der Zusammensetzung, vorhanden.

In einer besonderen Ausführungsform enthält die erfindungsgemäße Zusammensetzung zusätzlich schwerflüchtige UV-Absorber. Es kann einer oder es können mehrere verschiedene schwerflüchtige UV-Absorber sein.

In einer besonderen Ausführungsform ist der schwerflüchtige UV-Absorber in einer Menge von 1 bis 20 Gew.-% bevorzugt 3 bis 5 gew.% bezogen auf die Masse der Zusammensetzung, vorhanden.

Das Polycarbonat, das in der erfindungsgemäßen Zusammensetzung enthalten ist, kann nach üblichen Verfahren hergestellt werden. Es kann zum Beispiel aus Diphenolen und Kohlensäurediarylestern durch Umesterung hergestellt werden. Es kann zum Beispiel aus Phosgen und Bisphenolen oder Natrium-Bisphenolaten hergestellt werden (insbesondere nach dem sogenannten Phasengrenzflächen-Verfahren).

Beide Verfahren (Umesterung und Phasengrenzflächen-Verfahren) sind beschrieben in Schnell, Chemistry and Physics of Polycarbonates, Polymer Reviews, Volume 9, Interscience . Publishers, New York, London, Sydney, 1964, und in D.C. PREVORSEK, B.T. DEBONA and Y. KESTEN, Corporate Research Center, Allied Chemical Corporation, Moristown, New Jersey 07960, Synthesis of Poly(ester)carbonate Copolymers in Journal of Polymer Science, Polymer Chemistry Edition, Volume 19, Seiten 75 bis 90 (1980), und in D. Freitag, U. Grigo, P.R. Müller, N. Nouvertne, BAYER AG, "Polycarbonates" in Encyclopedia of Polymere Science and Engineering, Volume 11, Second Edition, 1988, Seiten 648 bis 718 und in U. Grigo, K. Kircher und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117 bis 299.

Das Polycarbonat der erfindungsgemäßen Zusammensetzung wird bevorzugt aus Diphenolen und Kohlensäurediarylestern durch Umesterung hergestellt. Die Umesterung erfolgt bevorzugt in der Schmelze. Bei dieser Herstellung kann das Polycarbonat bereits Diphenylcarbonat enthalten. Die erfindungsgemäße Zusammensetzung kann auf diese Weise also erhalten werden, ohne dass dem Polycarbonat Diphenylcarbonat hinzugefügt werden muss. Zumindest muss weniger Diphenylcarbonat hinzugefügt werden, als wenn von einem Polycarbonat ausgegangen wird, das frei von Diphenylcarbonat ist.

Im folgenden wird ein mögliches Verfahren zur Herstellung von Polycarbonat aus Diphenolen und Kohlensäurediarylestem durch Umesterung beschrieben. Das Polycarbonat, das auch ein Polyestercarbonat sein kann, wird durch die Schmelzumesterungsreaktion geeigneter Diphenole und Kohlensäurediarylester in Gegenwart eines geeigneten Katalysators hergestellt. Das Polycarbonat kann auch durch die Kondensation von Carbonatoligomeren, die Hydroxyendgruppen oder Carbonatendgruppen enthalten, und geeigneten Diphenolen sowie Kohlensäurediarylestern hergestellt werden.

Die Herstellung von Polycarbonaten nach dem Phasengrenzflächenverfahren wird bevorzugt wie folgt durchgeführt. Eine wässrige Lösung des Alkalisalzes eines Bisphenols wird mit einer Lösung von Phosgen in einem organischen Lösungsmittel, beispielsweise einem halogenierten Kohlenwasserstoff, intensiv in Kontakt gebracht. Die Polykondensation erfolgt an der Phasengrenze des zweiphasigen Gemisches.

Geeignete Kohlensäurediarylester im Zusammenhang mit der Erfindung sind Di-C₆ bis C₁₄-arylester, vorzugsweise die Diester von Phenol oder von alkylsubstituierten Phenolen, d. h. Diphenylcarbonat, Dikresylcarbonat und Di-4-tert.-butylphenyl carbonat. Am meisten bevorzugt ist Diphenylcarbonat. Geeignete Carbonatoligomere haben bevorzugt eine mittlere molare Masse von 220 bis 15 000 g/Mol.

Zu den geeigneten Di-C₆-C₁₄-arylestern gehören auch unsymmetrische Diarylester, die ein Gemisch von Arylsubstituenten enthalten. Besonders bevorzugt sind dabei Phenylkresylcarbonat und 4-tert.-Butylphenylphenylearbänat.

Zu den geeigneten Diarylestern gehören auch Gemische von mehr als einem Di-C₆-C₁₄-arylester. Besonders bevorzugte Gemische sind Gemische von Diphenylcarbonat, Dikresylcarbonat und Di-4-tert.-butylphenylcarbonat.

Bezogen auf 1 Mol Diphenol, können die Kohlensäurediarylester in Mengen von 1,00 bis 1,30 Mol, besonders bevorzugt in Mengen von 1,02 bis 1,20 Mol und ganz besonders bevorzugt in Mengen von 1,05 bis 1,15 Mol verwendet werden.

Geeignete Dihydroxybenzolverbindungen im Zusammenhang mit der Erfindung sind solche, die der Formel (5) entsprechen: 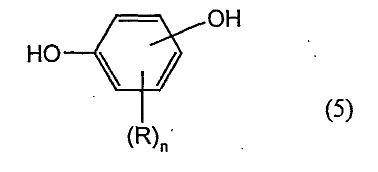 worin
- R: ein substituiertes oder nicht substituiertes Phenyl, Methyl, Propyl, Ethyl, Butyl, Cl oder Br ist und n für 0, 1 oder 2 steht.

Besonders bevorzugte Dihydroxybenzolverbindungen sind 1,3-Dihydroxybenzol, 1,4-Dihydroxybenzol und 1,2-Dihydroxybenzol.

Geeignete Diphenole im Zusammenhang mit der Erfindung sind solche, die der Formel (6) entsprechen: 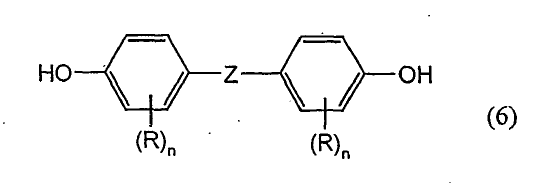 wobei
- Z: für C₁-C₈-Alkyliden oder C₅-C₁₂-Cycloalkyliden, S, SO₂ oder eine Einfachbindung steht und
- R: substituiertes oder unsubstituiertes Phenyl, Methyl, Propyl, Ethyl, Butyl, Cl oder Br ist und
- n: für 0, 1 oder 2 steht.

Bevorzugte Diphenole sind 4,4'-Dihydroxydiphenyl, 4,4'-Dihydroxydiphenylsulfid, 1,1-Bis(4-hydroxphenyl)cyclo-hexan, 1,2-Bis(4-hydroxyphenyl)benzol, 1,3-Bis(4-hydroxyphenyl)benzol, 1,4-Bis(4-hydroxyphenyl)benzol, Bis(4-hydroxyphenyl)methan, 2,2-Bis(4-hydroxyphenyl)propan, 2,4-Bis(4-hydroxyphenyl)-2-methylbutan, 2,2-Bis(3-methyl-4-hydroxy-phenyl)-propan, 2,2-Bis(3-chlor-4-hydroxyphenyl)propan, Bis(3,5-dimetehyl-4-hydroxy-phenyl)methan, 2,2-Bis(3,5-dimethyl-4-hydroxyphenyl)propan, Bis(3,5-dimethyl-4-hydroxyphenyl)sulfon, Bis(4-hydroxyphenyl)sulfon, 1,2-Bis[2-(4-hydroxy-phenyl)isopropyl]benzol, 1,3-Bis[2-(4-hydroxyphenyl)isopropyl]benzol, 1,4-Bis[2-(4-hydroxyphenyl)isopropyl]benzol, 1,1-Bis(4-hydroxyphenyl)-1-phenylethan, 2,4-Bis(4-hydroxyphenyl)-2-methylbutan, 2,2-Bis-(3,5-dichlor-4-hydroxyphenyl)-propan, 2,2-Bis(3,5-dibrom-4-hydroxyphenyl)propan, 1,1-Bis(4-hydroxyphenyl)-3,3,5-trimethylcyclohexan.

Die besonders bevorzugten Diphenole sind 1,1-Bis(4-hydroxyphenyl)-1-phenylethan, 2,2-Bis(4-hydroxyphenyl)propan, 4,4'-Dihydroxydiphenyl, 1,1-Bis(4-hydroxyphenyl)-3,3,5-trimethylcyclohexan, 2,2-Bis(3,5-dibrom-4-hydroxyphenyl)propan und 1,3-Bis[2-(4-hydroxyphenyl)isopropyl]benzol.

Zu den geeigneten Diphenolen gehören auch Gemische von mehr als einem Diphenol. Dabei entsteht ein Copolycarbonat. Besonders bevorzugte Gemische sind 1,3-Bis[2-(4-hydroxyphenyl)isopropyl]benzol, 1,1-Bis(4-hydroxyphenyl)-3,3,5-trimethylcyclohexan, 2,2-Bis(4-hydroxyphenyl)propan, 4,4'-Dihydroxydi-phenyl und 2,2-Bis(3,5-dibrom-4-hydroxyphenyl)propan.

Die Diphenole können kleine Mengen an Dihydroxybenzolverbindungen gemäß Formel (5) enthalten.

Zusätzlich kann ein Verzweigungsmittel hinzugefügt werden, wie zum Beispiel Verbindungen, die drei funktionelle phenolische OH-Gruppen enthalten. Dieses führt zu Verzweigungen des Polymeren. Dadurch wird das nicht-Newtonsche Fließverhalten des Polymers erhöht.

Zu den geeigneten Verzweigungsmitteln gehören Phloroglucin, 3,3-Bis(3-methyl-4-hydroxyphenyl)-2-oxo-2,3-dihydroindol, 4,6-Dimethyl-2,4,6-tris(4-hydroxyphenyl)-hepten-2, 4,6-Dimethyl-2,4,6-tris(4-hydroxyphenyl)-heptan, 1,3,5-Tris(4-hydroxyphenyl)benzol, 1,1,1 -Tris(4-hydroxyphenyl)ethan, Tris(4-hydroxyphenyl)phenylmethan, 2,2-Bis[4,4-bis(4-hydroxyphenyl)cyclohexyl]propan, 2,4-Bis(4-hydroxyphenylisopropyl)phenol, 2,6-Bis(2-hydroxy-5'-methylbenzyl)-4-methylphenol, 2-(4-hydroxyphenyl)-2-(2,4-dihydroxyphenyl)propan, Hexakis(4-(4-hydroxyphenylisopropyl)phenyl)orthoterephthalat, Tetrakis(4-hydroxyphenyl)methan, Tetrakis(4-(4-hydroxyphenylisopropyl)phenoxy)methan und 1,4-Bis((4',4"-dihydroxy-triphenyl)-methyl)benzol, Isatinbiskresol, Pentaerythrit, 2,4-Dihydroxybenzoesäure, Trimesinsäure, Cyanursäure.

Zur Herstellung der erfindungsgemäßen Polycarbonate geeignete Katalysatoren sind beispielsweise solche der allgemeinen Formel (7) 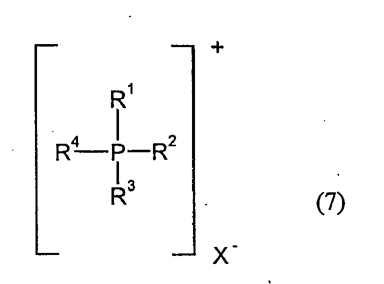 worin
R¹, R², R³ und R⁴ die gleichen oder verschiedene C₁ bis C₁₈-Alkylene, C₆ bis C₁₀-Aryle oder C₅ bis C₆-Cycloalkyle bezeichnen können und X⁻ für ein Anion steht. bei dem das entsprechende Säure-Base-Paar (H⁺ + X⁻ ↔ HX) ein pK_{b} von <11 hat.

Bevorzugte Katalysatoren sind Tetraphenylphosphoniumfluorid, Tetraphenylphosphoniumtetraphenylborat und Tetraphenylphosphoniumphenolat.

Besonders bevorzugt ist Tetraphenylphosphoniumphenolat.

Bevorzugte Mengen an Phosphoniumsalzkatalysatoren sind 10⁻² bis 10⁻⁸ Mol pro Mol Diphenol und die besonders bevorzugten Katalysatormengen sind 10⁻⁴ bis 10⁻⁶ Mol pro Mol Diphenol.

Weitere Cokatalysatoren können gegebenenfalls zusätzlich zu dem Phosphoniumsalz verwendet werden, um die Geschwindigkeit der Polymerisation zu erhöhen. Dazu gehören Salze von Alkalimetallen und Erdalkalimetallen, wie Hydroxide, Alkoxide und Aryloxide von Lithium, Natrium und Kalium, vorzugsweise Hydroxid-, Alkoxid- oder Aryloxidsalze von Natrium.

Besonders bevorzugt sind Natriumhydroxid und Natriumphenolat.

Die Mengen des Cokatalysators können beispielsweise im Bereich von 1 bis 200 ppb, vorzugsweise 5 bis 150 ppb und besonders bevorzugt 10 bis 125 ppb liegen, jeweils berechnet als Natrium.

Die Polycarbonate können unter Reaktionsbedingurigen hergestellt werden, die in Stufen mit Temperaturen von 150 bis 400°C durchgeführt werden, die Verweilzeit in jeder Stufe kann 15 Minuten bis 5 Stunden betragen, und die Drücke betragen 1000 bis 0,01 mbar.

Die erfindungsgemäße Zusammensetzung kann weitere Additive enthalten.

Die erfindungsgemäßen Zusammensetzungen (Coextrusionsformmassen) bieten Vorteile auf beliebigen Polycarbonat-Formmassen als Basismaterial: Insbesondere ist ein Vorteil gegeben, wenn die Coextrusionsformmasse und das Basismaterial mit dem gleichen Entformungsmittel ausgerüstet sind.

Die erfindungsgemäßen Zusammensetzungen können als Coextrusionsformmassen zur Erzeugung von massiven Kunststoffplatten oder sogenannten Stegplatten (auch Hohlkammerplatten genannt, z.B. Stegdoppelplatten) eingesetzt werden.

Es können auch Platten hergestellt werden, die auf einer Seite oder auf beiden Seiten eine zusätzliche Deckschicht mit der erfindungsgemäßen Coextrusionsformmasse mit einem bestimmten UV-Absorbergehalt aufweisen.

Die erfmdungsgemäßen Zusammensetzungen erlauben die erleichterte Herstellung von Polycarbonat-Formkörpern, insbesondere von Platten und aus ihnen hergestellte Formkörper wie z.B. Verscheibungen für Gewächshäuser, Wintergärten, Bushaltestellen, Reklametafeln, Schilder, Schutzscheiben, Automobilverscheibungen, Fenster und Überdachungen.

Nachträgliche Bearbeitungen der mit der erfindungsgemäßen Zusammensetzungen beschichteten Extrusionskörper, wie zum Beispiel Tiefziehen oder Oberflächenbearbeitungen, wie zum Beispiel Ausrüstung mit Kratzfestlacken, wasserspreitenden Schichten und ähnliches sind möglich und die durch diese Verfahren hergestellten Formkörper sind ebenfalls Gegenstand der vorliegenden Erfindung.

Die Coextrusion als solche ist literaturbekannt (siehe beispielsweise EP-A 0 110 221 und EP-A 0 110 238). Im vorliegenden Fall wird vorzugsweise wie folgt verfahren: An einem Coextrusionsadapter sind Extruder zur Erzeugung der Kernschicht und Deckschicht(en) angeschlossen. Der Adapter ist so konstruiert, dass die die Deckschicht(en) formende Schmelze als dünne Schicht haftend auf die Schmelze der Kemschicht aufgebracht werden. Der so erzeugte, mehrschichtige Schmelzestrang wird dann in der anschließend angeschlossenen Düse in die gewünschte Form (Steg- oder Massivplatte) gebracht. Anschließend wird in bekannter Weise mittels Kalandrierung (Massivplatte) oder Vakuumkalibrierung (Stegplatte) die Schmelze unter kontrollierten Bedingungen abgekühlt und anschließend abgelängt. Gegebenenfalls kann nach der Kalibrierung ein Temperofen zur Eliminierung von Spannungen angebracht werden. Anstelle des vor der Düse angebrachten Adapters kann auch die Düse selbst so ausgelegt sein, dass dort die Zusammenfuhrung der Schmelzen erfolgt.

### Beispiele

Die folgenden Beispiele dienen der Veranschaulichung der Erfindung. Die Beispiele sind lediglich besondere Ausführungsformen der Erfindung. Die Erfindung ist nicht auf den Umfang der Beispiele beschränkt.

### Herstellung des Polcarbonat 1:

Das Polcarbonat 1 wurde durch Polykondensation von Diphenylcarbonat und Bisphenol A in der Schmelze unter Verwendung von Tetraphenylphosphoniumphenolat als Katalysator hergestellt. Das Polycarbonat 1 hatte einen Schmelzflussindex (MFR) gemäß ISO 1133 von 5,8 g/10 min bei 300°C und 1,2 kg Belastung.

### Herstellung der Zusammensetzungen (Compounds):

Auf einem Zweiwellenextruder wurden die Stoffgemische deren Rezepturen in der nachfolgenden Tabelle angegebenen sind, bei 310°C gemischt und extrudiert (compoundiert) und anschließend granuliert. Bei den Prozentangaben handelt es sich um Gew.-%.

| **Compound** | **Basismaterial** | **UV-Absorber** | **Entformungsmittel** | **Sonstiges** |
|---|---|---|---|---|
| **A** | Makrolon^{®} 3108 | 5 % Tinuvin^{®} 360^{*)} | 0,1 % PETS^{***)} | |
| **B** | Polycarbonat 1 | 5 % Tinuvin^{®} 360^{*)} | 0,1 % PETS^{***)} | |
| **C** | Makrolon^{®} 3108 | 4 % Tinuvin^{®} 1577^{**)} | - | |
| **D** | Polycarbonat 1 | 4 % Tinuvin^{®} 1577^{**)} | - | |
| **E** | Polycarbonat 1 | 5 % Tinuvin^{®} 360^{*)} | 0,1 % PETS^{***)} | 0,04 % Diphenylcarbonat |

| | | | | |
|---|---|---|---|---|
| ^{*)} 2,2'-Methylenbis[4-(1,1,3,3-tetramethylbutyl)-6-(2H-benzotriazol-2-yl)phenol]; im Handel erhältlich von der Firma Ciba Spezialitätenchemie, Lampertheim, Deutschland ^{**)} 2-(4,6-Diphenyl-1,3,5-triazin-2-yl)-5-hexyloxyphenol; im Handel erhältlich von der Firma Ciba Spezialitätenchemie, Lampertheim, Deutschland ^{***)} Pentaerythrittetrastearat Im Handel erhältlich von der Firma Cognis, Düsseldorf, Deutschland | | | | |

Makrolon^{®} 3108 ist ein lineares Bisphenol-A-Homopolycarbonat mit einem Schmelzflussindex (MFR) gemäß ISO 1133 von 6,5 g/10 min bei 300°C und 1,2 kg Belastung; Makrolon^{®} 3108 ist im Handel erhältlich von der Bayer AG, D-51368 Leverkusen, Deutschland.

Der Gehalt an Diphenylcarbonat (DPC) wurde an den Compounds über die HPLC (High-Pressure Liquid Chromatography) bestimmt. Gefunden wurden folgende Ergebnisse:

| **Compound** | **Gehalt an DPC** |
|---|---|
| **A** | 36 ppm |
| **B** | 133 ppm |
| **C** | 36 ppm |
| **D** | 133 ppm |
| **E** | 330 ppm |

Compound E enthält nur 330 ppm Diphenylcarbonat, obwohl rezepturgemäß 400 ppm zugegeben worden waren. Vermutlich ist also ein Teil des Diphenylcarbonats bei der Herstellung des Compounds ausgedampft.

### Herstellung von Stegdoppelplatten:

Stegdoppelplatten (auch Hohllcammerplatten genannt) mit einer Dicke von 10 mm, wie sie beispielweise in EP-A 0 110 238 beschrieben sind, wurden aus folgenden Formmassen hergestellt: Als Basismaterial wurde Makrolon^{®} 1243 (verzweigtes Bisphenol-A-Homopolycarbonat der Firma Bayer AG, D-51368 Leverkusen, Deutschland, mit einem Schmelzflussindex (MFR) gemäß ISO 1133 von 6,5 g/10 min bei 300°C und 1,2 kg Belastung) verwendet. Coextrudiert wurde dieses mit den in der obigen Tabelle angegebenen Compounds A, B und E. Die Compounds A, B und E enthalten das Polycarbonat 1 oder das im Phasengrenzflächen-verfahren hergestellte Makrolon^{®} 3108. Die Dicke der Coextrusionsschicht betrug jeweils etwa 50 µm.

### Herstellung von Massivplatten:

Massivplatten mit einer Dicke von 2 mm wurden aus Makrolon^{®} 3103 (lineares Bisphenol-A-Homopolycarbonat mit einem Schmelzflussindex (MFR) gemäß ISO 1133 von 6,5 g/10 min bei 300°C und 1,2 kg Belastung, im Handel erhältlich von der Bayer AG, D-51368 Leverkusen, Deutschland) hergestellt. Coextrudiert wurde dieses mit den in der Tabelle angegebenen Compounds C und D auf Basis von Polycarbonat 1 oder des im Phasengrenzflächenverfahren hergestellten Makrolon^{®} 3108. Die Dicke der Coextrusionsschicht betrug jeweils etwa 60 µm.

Die verwendeten Maschinen und Apparate zur Herstellung von mehrschichtigen Platten werden im Folgenden beschrieben:

Die Einrichtung für die Herstellung von Stegplatten bestand aus:
- dem Hauptextruder mit einer Schnecke der Länge 33 D und einem Durchmesser von 70 mm mit Entgasung
- dem Coexadapter (Feedblocksystem)
- einem Coextruder zum Aufbringen der Deckschicht mit einer Schnecke der Länge 25 D und einem Durchmesser von 30 mm
- der speziellen Breitschlitzdüse mit 350 mm Breite
- dem Kalibrator
- der Rollenbahn
- der Abzugseinrichtung
- der Ablängvorrichtung (Säge)
- dem Ablagetisch.

Die Einrichtung für die Herstellung von Massivplatten bestand aus:
- dem Hauptextruder mit einer Schnecke der Länge 33 D und einem Durchmesser von 60 mm mit Entgasung
- dem Coexadapter (Feedblocksystem)
- einem Coextruder zum Aufbringen der Deckschicht mit einer Schnecke der Länge 25 D und einem Durchmesser von 30 mm
- der speziellen Breitschlitzdüse mit 350 mm Breite
- dem Glättkalander
- der Rollenbahn
- der Abzugseinrichtung
- der Ablängvorrichtung (Säge)
- dem Ablagetisch.

Das Polycarbonat-Granulat des Basismaterials wird dem Fülltrichter des Hauptextruders zugeführt, das UV-Absorber-haltige Coextrusionsmaterial dem des Coextruders. Im jeweiligen Plastifiziersystem Zylinder/Schnecke erfolgte das Aufschmelzen und Fördern des jeweiligen Materials. Beide Materialschmelzen werden im Coexadapter zusammengeführt und bildeten nach dem Verlassen der Düse und nach dem Abkühlen im Kalibrator einen Verbund. Die weiteren Einrichtungen dienten dem Transport, Ablängen und Ablegen der extrudierten Platten.

### Auswertung der Coextrusionsversuche:

**Coextrusion mit Compound A (Vergleich):**
- erste großflächige Störungen traten auf nach 2,5 Stunden
- nach 4 Stunden trat ein Aufreißen der Plattenoberfläche auf.
- Daraus ergibt sich als Gesamtbewertung die Note: schlecht

**Coextrusion mit Compound B (erfindungsgemäß):**
- erste kleinere Ablagerungen traten auf nach 2,5 Stunden
- erste großflächige Störungen traten auf nach 3,5 Stunden
- ein Aufreißen der Plattenoberfläche wurde nicht beobachtet
- Daraus ergibt sich als Gesamtbewertung die Note: gut

**Coextrusion mit Compound C (Vergleich):**
- erster Walzenbelag trat auf nach 30 Minuten. Dieser hatte sehr geringe negative Auswirkungen auf die Plattenqualität
- nach 3 Stunden trat stärkerer Belag auf den Walzen und eine merklich raue Plattenoberfläche auf
- Daraus ergibt sich als Gesamtbewertung die Note: schlecht

**Coextrusion mit Compound D (erfindungsgemäß):**
- der Walzenbelag war über die gesamte Extrusionszeit von 4 Stunden signifikant geringer als bei Compound C
- die Plattenoberfläche wurde nicht negativ beeinflusst
- Daraus ergibt sich als Gesamtbewertung die Note: gut

**Coextrusion mit Compound E (Vergleich):**
- erste kleinere Ablagerungen traten auf nach 1,5 Stunden
- erste großflächige Störungen traten auf nach 1 Stunde und 45 Minuten
- Daraus ergibt sich als Gesamtbewertung die Note: schlecht

## Patentansprüche

1. Ein mehrschichtiges Erzeugnis umfassend mindestens eine Schicht A und mindestens eine Schicht B, wobei die Schicht A Polycarbonat oder Polyestercarbonat enthält, und wobei die Schicht B eine Zusammensetzung ist enthaltend Polycarbonat und 50 ppm bis 300 ppm, bezogen auf die Masse der Zusammensetzung, Diphenylcarbonat.

2. Erzeugnis gemäß Anspruch 1, wobei die Schicht B Polycarbonat in einer Menge von wenigstens 80 Gew-% enthält.

3. Erzeugnis gemäß Anspruch 1, wobei die Zusammensetzung 0 bis 20 Gew.-% UV-Absorber enthält.

4. Erzeugnis gemäß Anspruch 3, wobei die Zusammensetzung 3 bis 5 Gew.-% UV-Absorber enthält.

5. Das mehrschichtige Erzeugnis nach Anspruch 1, wobei das Erzeugnis die Schichtfolge B-A-B aufweist.

6. Das mehrschichtige Erzeugnis nach Anspruch 1 oder 5, wobei die Schicht A Bisphenol-A-Homopolycarbonat enthält.

7. Das mehrschichtige Erzeugnis nach einem der Ansprüche 1 - 6, wobei das mehrschichtige Erzeugnis eine mehrschichtige Platte ist.

8. Ein Verfahren zur Herstellung des mehrschichtigen Erzeugnisses nach einem der Ansprüche 1 bis 7 umfassend die Coextrusion des Polycarbonats oder des Polyestercarbonats, das in der Schicht A enthalten ist, und der Zusammensetzung, die in der Schicht B enthalten ist.

## Claims

1. A multi-layer product comprising at least one layer A and at least one layer B, wherein layer A contains polycarbonate or polyestercarbonate, and layer B is a composition containing polycarbonate and 50 ppm to 300 ppm, in relation to the mass of the composition, of diphenyl carbonate.

2. Product according to claim 1, wherein the layer B contains at least 80 wt.% polycarbonate.

3. Product according to claim 1, wherein the composition contains 0 to 20 wt.% UV-absorber.

4. Product according to claim 3, wherein the composition contains 3 to 5 wt.% UV-absorber.

5. The multi-layer product according to claim 1, wherein the product has the layer sequence B-A-B.

6. The multi-layer product according to claim 1 or 5, wherein layer A contains bisphenol A homopolycarbonate.

7. The multi-layer product according to anyone of claims 1 to 6, wherein the multi-layer product is a multi-layer sheet.

8. A process for the production of the multi-layer product according to any one of claims 1 to 7 comprising co-extrusion of the polycarbonate or the polyestercarbonate contained in layer A, and the composition contained in layer B.

## Revendications

1. Un produit multicouche comprenant au moins une couche A et au moins une couche B, la couche A contenant un polycarbonate ou un polyester-carbonate et la couche B consistant en une composition contenant un polycarbonate et 50 ppm à 300 ppm, sur le poids total de la composition, de carbonate de diphényle.

2. Produit selon la revendication 1, dans lequel la couche B contient un polycarbonate en quantité d'au moins 80 % en poids.

3. Produit selon la revendication 1, dans lequel la composition contient 0 à 20 % en poids d'absorbeur d'UV.

4. Produit selon la revendication 3, dans lequel la composition contient 3 à 5 % en poids d'absorbeur d'UV.

5. Le produit multicouche selon la revendication 1, présentant la séquence de couches B-A-B.

6. Le produit multicouche selon la revendication 1 ou 5, dans lequel la couche A contient un homopolycarbonate du bisphénol A.

7. Le produit multicouche selon l'une des revendications 1 à 6, consistant en une plaque multicouche.

8. Un procédé pour la fabrication du produit multicouche selon l'une des revendications 1 à 7, qui comprend la co-extrusion du polycarbonate ou du polyester-carbonate contenu dans la couche A et de la composition contenue dans la couche B.
